# EUROPEAN PATENT APPLICATION

(11) **EP 4 361 431 A1**
(43) Date of publication of application: **01.05.2024**
(21) Application number: 22204804.3
(22) Date of filing: 31.10.2022
(51) Int. Cl.: F03B 13/18, F03B 13/20, B63B 35/44

(54) **WAVE ENERGY CONVERTER**

(71) Applicant: Goby AS, 4270 Åkrehamn (NO)
(72) Inventor: Knutsen, Freddy, 4270 Åkrehamn (NO)
(74) Representative: Ullrich & Naumann PartG mbB

(57) **Abstract**

Wave energy converter (1), comprising
a floating unit (2) that floats on or near the fluid surface, wherein a piston (7) is movably arranged within the floating unit (2),
a generator (26) that is assigned to the floating unit (2) and that is capable of producing electric energy when driven, and
a subsea retardation unit (10) with a piston rod (12), extending from the subsea retardation unit (10) into the floating unit (2) and connected to the piston (7), wherein waves imparting motion on the floating unit (2) cause the floating unit (2) to move relative to the piston (7), thus generating a fluid flow capable of driving the generator (26).

## Description

The present invention relates to a wave energy converter comprising a floating unit that floats on or near the water surface.

Previously known wave energy converters with floating units employ different drive means in order to drive a power generator or a turbine.

With regard to prior art, reference is made to international publication WO 2012/169898 A1, disclosing a floating unit that comprises a drive means connected to a power generator for generation of electric energy. A cable runs from an anchorage point on the seabed and up and around a drive shaft of the drive means. Linear movement of the cable is converted to a torque in the drive means.

With regard to other prior art documents relating to wave energy converters with floating units, reference is made to DE 1994 7149 D1 and DE 20 2008 007 235 U1.

However, the design of known wave energy converters is not ideal. The mechanisms for converting wave energy into electric energy are various. A problem frequently occurring with wave energy converters is destruction, especially in circumstances of high waves and/or strong wind. Known wave energy converters and mechanisms can be improved with regard to stability, simplicity, areas of application and suitability for mass production.

It is therefore an object of the present invention to improve and further develop a wave energy converter of the described type, such as to enhance its stability and simplicity. Another object of the invention is to provide a wave energy converter that is suitable for use in further areas of application and for mass production.

In accordance with the invention, the aforementioned object is accomplished by a method comprising the features of claim 1. According to this claim 1, a wave energy converter comprises a floating unit that floats on or near the water surface, wherein a piston is movably arranged within the floating unit. The wave energy converter further comprises a generator that is assigned to the floating unit and that is capable of producing electric energy when driven. The wave energy converter further comprises a subsea retardation unit and a piston rod, extending from the subsea retardation unit into the floating unit and connected to the piston. Waves imparting motion on the floating unit cause the floating unit to move relative to the piston, thus generating a fluid flow capable of driving the generator.

The wave energy converter can be used in seawater. In many cases, the fluid surface may be a water surface or sea level. Still, use in other environments and in connection with other fluids is possible. The retardation unit can be positioned in a suitable distance from the floating unit within the fluid. When waves are passing through the fluid, they will effectively lift and drop the floating unit with the fluid surface. The movement of the retardation unit within the fluid is however not affected by the waves in the same way that the floating unit is. Consequently, with each wave lifting and dropping the floating unit, there will be a relative motion between the floating unit and the retardation unit, which the wave energy converter is designed to use for producing electric energy.

In an inventive manner, it has been recognised that the up objects of the invention can be achieved in a surprisingly simple manner by providing a wave energy converter with a piston that is movably arranged within the floating unit. The special mechanism according to the present invention, where the piston is connected to a piston rod extending from the subsea retardation unit into the floating unit, is easy and relatively cheap to build. The wave energy converter with the piston mechanism is rigid and robust to withstand harsh wind and sea conditions. Furthermore, the Mechanism where waves imparting motion on the floating unit cause the floating unit to move relative to the subsea retardation unit and therefore relative to the piston is advantageous for converting wave energy into electric energy. In the piston type system according to the invention, it is irrelevant whether it is the piston that stands still and the floating unit moves, or whether it is the other way around and the floating unit stands still and the piston moves. Regardless of the inertial reference frame, it is the relative movement between the piston and the floating unit that drives the wave energy converter. The relative movement between the piston and the floating unit generates a fluid flow. The fluid flow can be used for driving the generator. Therefore, the wave energy converter is suitable for use in further areas of application. Thus, the wave energy converter according to the invention is improved with regard to stability, simplicity, areas of application and suitability for mass production.

According to a preferred embodiment, the piston of the wave energy converter may be arranged within the floating unit to move in a substantially vertical direction.

Preferably, the piston rod extends in a substantially vertical direction from the subsea retardation unit upwards into the floating unit. That way, the piston will move in a substantially vertical direction up and down within the floating unit. However, depending on the different areas of application and depending on fluid flow and tide circumstances other arrangements and orientations are possible, for example an oblique orientation that is adapted to the flow direction and velocity.

The stroke of the piston within the floating unit can be delimited by at least one damping device. Such damping devices may be arranged on the piston rod above and below the floating unit. Preferably, the stroke may be delimited to 2 meters, 1.5 meters, 1 meter or less. The damping devices are enhancing the stability of the wave energy converter and make it suitable to withstand harsh weather and sea conditions.

Preferably, the acceleration and/or speed of the relative movement between the floating unit and the piston can be measured by respective sensors. The sensor data may be used by an electronic control system to support the damping devices, for example by setting their damping factor or by providing additional information. Also, the damping devices may be supported by reducing the flow to the generator or turbine by use of an electronically controlled valve, which may preferably be controlled by the electronic control system.

According to a preferred embodiment, the floating unit may comprise an inlet nozzle and/or an outlet nozzle for fluid to enter or leave the floating unit. The nozzles can be designed to be in fluid communication with the piston pushing fluid through the nozzles. The nozzles can also be in fluid communication with the generator. Preferably, fluid from outside the wave energy converter - for example seawater - can be sucked in through the at least one inlet nozzle, when the piston moves downward within the floating unit. When the piston moves upward within the floating unit, fluid can be pushed out through the outlet nozzle. At the same time, the piston movement can be utilised in order to push the fluid towards the generator or through a separate generator circulation loop. The generator circulation loop can be designed as a piping system that is internal to the floating unit. Advantageously, the piping system may guide the fluid flow from one side of the piston through the piping system and to the other side of the piston. The piping system may comprise a system of valves arranged such that the flow over the generator or turbine only flows in one direction over the generator or turbine.

The generator can be driven by a turbine to produce electric energy. In general, any suitable type of turbine can be used. By switching the valves in the piping system, it can be achieved that the fluid flow over the turbine will have the same direction and that the water flows from the piston cylinder under pressure through the generator and also back to the piston cylinder utilizing suction effects.

The turbine can be driven by the water flow and drive a generator shaft. Preferably, the turbine may be an omni-directional turbine and/or pump that functions without flow to air. The turbine can be implemented as a Kaplan turbine having a propeller - also called runner - with adjustable blades. In particular, the pitch of the blades can be set according to the fluid flow rate. When the fluid flow rate is high, blades can be pitched vertically or axial. When the fluid flow rate is high, blades can be pitched horizontally or tangential. That way, even with the varying flow rate, the blade can be pitched in an optimum angle of attack for the fluid. The Kaplan turbine allows efficient operation for a range of flow conditions.

In order to keep the wave energy converter in position and in orientation relative to the wave direction or fluid flow direction, the floating unit may comprise at least one lateral fin. The lateral fin may be attached or affixed to the floating unit or formed in one piece with the floating unit.

According to another preferential embodiment, the wave energy converter may comprise a work platform. Preferably, the work platform may be arranged on top of or above the main body of the floating unit, such that the working platform will substantially be above the fluid surface or above sea level.

Since the wave energy converter according to the invention is suitable for various areas of application, such work platform may be comprise various kinds of technical equipment, including but not limited to antennas for receiving and sending information, inspection instrumentation, research instrumentation, electric energy storage and/or instrumentation for intelligence or homeland security.

Preferably, the electric energy produced by the generator of the wave energy converter can be used to power the technical equipment that is arranged on the work platform. That way, the wave energy converter according to the present invention can be used to provide self-sufficient and energy independent work platforms at sea or in other words autonomous stand-alone systems for various areas of application.

According to yet another preferred embodiment the present invention, the wave energy converter may be anchored to a ground anchor. The ground anchor could be positioned on the seabed. The ground anchor may for example be an ump weight, bolt attachment or suction anchor. The wave energy converter could be anchored to the ground anchor using an elongate connection element, which may be attached to the wave energy converter, for example to the floating unit. Advantageously, the elongate connection element can be attached to the subsea retardation unit of the wave energy converter. The elongate connection element can for example comprise cable, chain or rope.

The retardation unit may comprise a buoyancy element to compensate for approximately half the weight of the elongate connection element, as well as the weight of the wave energy converter elements with the associated equipment such as a work platform and technical instrumentation etc. The buoyancy element can achieve that the retardation element may float in a substantially neutral position in the sea.

In order to make the wave energy converter less vulnerable to harsh weather and sea conditions, the elongate connection element does not anchor the wave energy converter directly to the ground anchor. Instead, the elongate connection element coming from the wave energy converter is guided to the ground via a chain buoy and/or a subsea floater and/or attachments thereof.

According to a preferred embodiment, the elongate connection element comprises at least one cable to transport electric energy to a subsea storage unit for electric energy. The subsea storage unit may be assigned to or arranged on the ground anchor, the chain buoy, the subsea floater and/or any attachments thereof.

With a subsea storage unit to store electric energy, yet further areas of application for the wave energy converter according to the invention will arise. For example, the subsea storage unit could be utilized to charge remotely operated vehicles such as underwater drones. The subsea storage unit could be used as the charging spot, similar to a gas station, for such remotely operated vehicles "ROVs".

There are several ways how to design and further develop the teaching of the present invention in an advantageous way. To this end, it is to be referred to the patent claims subordinate to patent claim 1 on the one hand and to the following explanation of preferred examples of embodiments of the invention, illustrated by the drawing on the other hand. In connection with the explanation of the preferred embodiments of the invention by the aid of the drawing, generally preferred embodiments and further developments of the teaching will be explained. In the drawing
- Fig. 1: is an illustration of an exemplary embodiment of a wave energy converter according to the invention,
- Fig. 2: is an illustration of the floating unit of the wave energy converter of Fig. 1,
- Fig. 3: is an illustration of an exemplary embodiment of the wave energy converter according to the invention anchored to a ground anchor and
- Fig. 4: is an illustration of four graphs displaying distribution functions of several measurement values regarding the wave energy converter.

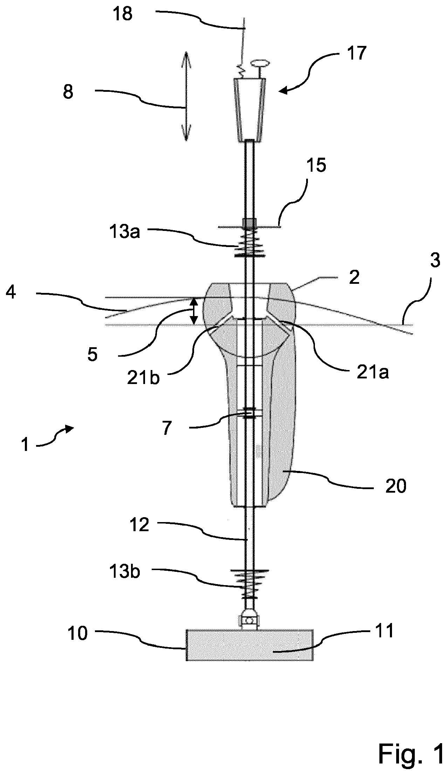

- Fig. 1: is showing a wave energy converter 1 with a floating unit 2.

The floating unit 2 floats on or near the sea level 3. A wave 4 on the oscillating around the sea level 3 is illustrated in a schematic form. In addition, the stroke 5 of the wave 4 is depicted in a schematic form. A piston 7 is movably arranged within the floating unit to move in a substantially vertical direction 8. The wave energy converter 2 further comprises a subsea retardation unit 10 with a buoyancy element 11 inside to compensate for weight and help the retardation unit 10 maintain a substantially neutral altitude in the sea.

A piston rod 12 is extending from the subsea retardation 10 unit into the floating unit 2 and is connected to the piston 7. When a wave 4 imparts motion on the floating unit 2 vertical direction 8, the floating unit 2 will move relative to the piston 7, thus generating a fluid flow through the floating unit 2.

The piston rod 12 is equipped with damping devices 13a, 13b. The damping devices 13a, 13b are arranged on the piston rod 12 above and below the floating unit 2. The damping devices 13a, 13b are effectively delimiting the maximum stroke of the piston 7 within the floating unit 2.

The piston rod 12 is further extending upward through the floating unit 2 and is supporting a work platform 15. The work platform 15 is arranged above the sea level 3 and above the main body of the floating unit 2. Technical equipment 17 to be arranged the work platform 15 is schematically depicted, for example an Antenna 18 for sending and receiving information.

The floating unit 2 further comprises a lateral fin 20 an inlet nozzle 21a and an outlet nozzle 21b. Fluid close to the sea level 3 can be sucked in through the inlet nozzle 21a when the piston 7 performs a downward stroke, meaning the piston 7 moves downward within the floating unit 2, or in other words, the floating unit 2 moves upwards relative to the retardation unit 10.

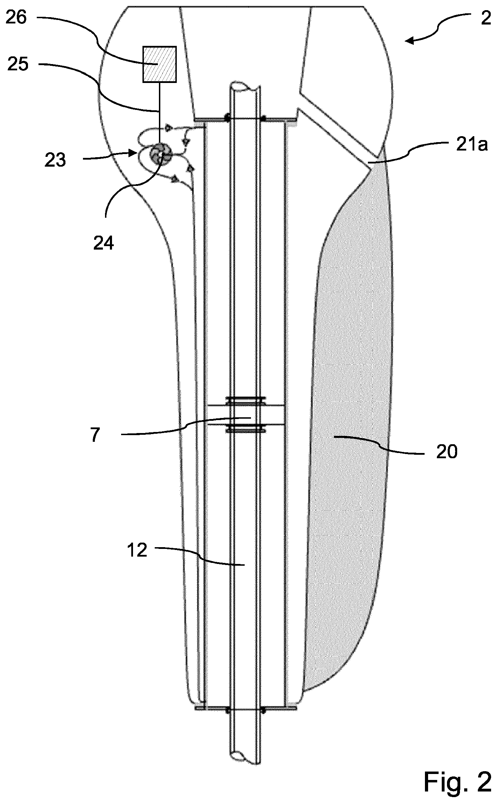

Fig. 2 shows a larger view of the floating unit 2. Separate generator circulation loops 23 of an internal piping system for the fluid pushed through the floating unit 2 by the piston 7 are depicted. The fluid pushed through the generator circulation loops 23 drive a Kaplan turbine 24. The Kaplan turbine in turn drives a generator shaft 25 in order to drive a generator 26 which produces electric energy. The generator may be a 2 kW generator. The energy produced by the generator 26 is used for the technical equipment on the work platform (not shown in Fig. 2).

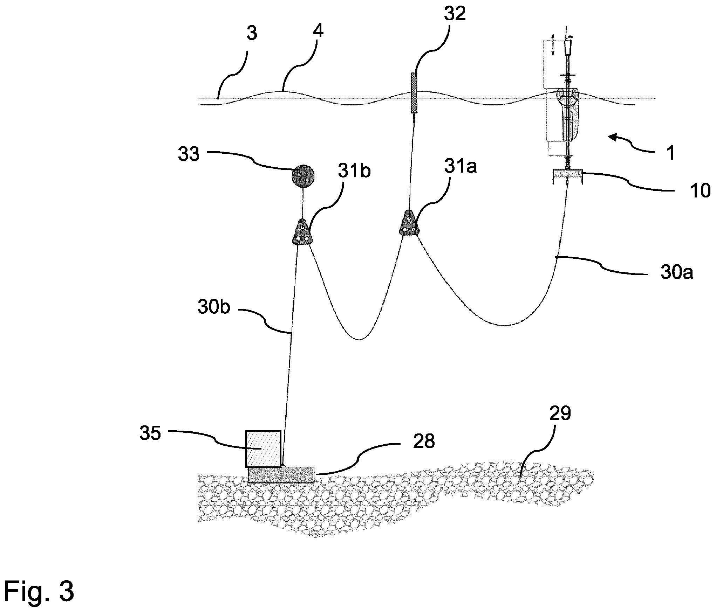

In Fig. 3, a more general setup of the wave energy converter 1 is illustrated. The wave energy converter 1 is anchored to a ground anchor 28 on the seabed 29, by an elongate connection element 30a implemented as a chain including a cable. The elongate connection element 30a is attached to the subsea retardation unit 10 of the wave energy converter 1.

From the subsea retardation unit 10, the elongate connection element 30a is guided to the ground via an attachment 31a of a chain buoy 32 floating on or near the sea level 3 and via an attachment 31b of a subsea floater 33. The attachments 31a and 31b and are designed as a threeholed tab to ensure easy and secure connections of the elongate connection element 30.

The subsea floater 33 supplies sufficient buoyancy to hold approximately half of the chain weight of the elongate connection element 30a that is loaded on the chain buoy 32.

To ensure a stable anchoring of the wave energy converter 1 which is not significantly affected by storms/tides/flows etc., the subsea floater 33 serves as a holding point for the elongate connection element 30a implemented as the anchor chain. The subsea floater 33 is arranged about 10 to 20 m below the sea level 3. The elongate connection element 30b between the subsea anchor 28 and the attachment 31b is implemented as a nylon rope, providing flexibility in the system.

The elongate connection elements 30a, 30b comprise a cable to transport electric energy from the generator in the wave energy converter 1 to a subsea storage unit 35. In this exemplary embodiment, the subsea storage unit 35 is a separate unit arranged on the Ground anchor 28. The subsea storage unit 35 can be utilized for a variety of areas of application. One example would be to charge remotely operated vehicles such as underwater drones (not shown).

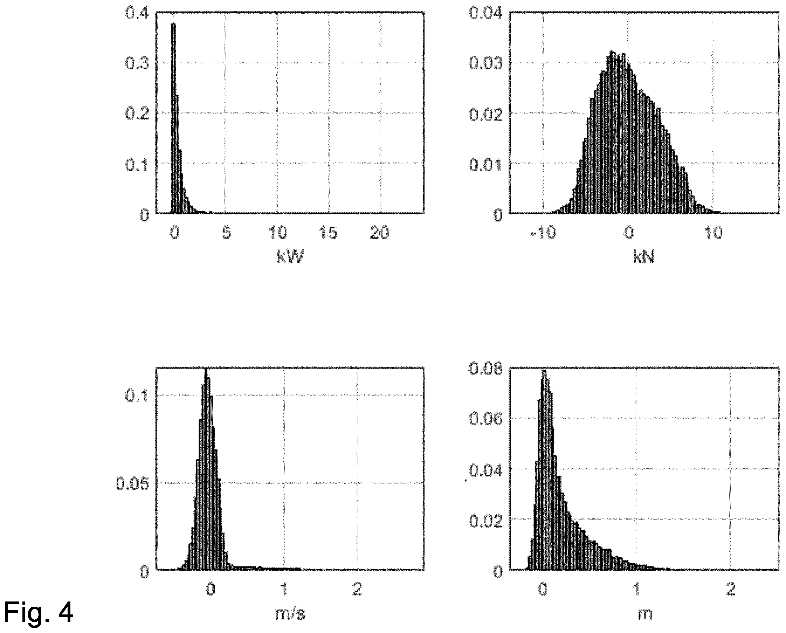

Fig. 4 is showing exemplary graphs of distribution functions of several measurement values obtained by simulating an experimental setup of a wave power plant according to the invention.

In the experimental setup, the significant wave height Hₛ was set to 0,5 m and the zero crossing wave period T_{z} was set to 3,0 seconds.

In the graph on the top left of Fig. 4, the distribution function of the energy production of the wave energy converter in Kilowatts "kW" is illustrated. It can be seen from the graph that the energy production is quite reasonable and is distributed with a mean of 0.5 kW. Furthermore, there are no very high peaks, which is favorable for the stability of the wave energy converter, which is not significantly affected by storms/tides/flows etc. and can thus withstand harsh weather and sea conditions.

In the graph on the top right of Fig. 4, the distribution function of the piston force in Kilonewton "kN" is illustrated. The piston force is reasonable and the loads on the Piston are less than 10 kN.

In the graph on the bottom left of Fig. 4, the distribution function of the relative velocity of the piston within the floating unit in meters per second "m/s" is illustrated. The velocity is for the most part less than 1.0 meters per second.

In the graph on the bottom right of Fig. 4, the distribution function of the relative movement of the piston within the floating unit in meters "m" is illustrated. The movement is within the preferred maximum stroke of 2.0 meters, which means that there are no significant end stop effects in the system.

Many modifications and other embodiments of the invention set forth herein will come to mind to the one skilled in the art to which the invention pertains having the benefit of the teachings presented in the foregoing description and the associated drawings. Special emphasis is made on the circumstance that the embodiments described above may be scaled to smaller or larger units. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

### List of reference signs

- 1: Wave energy converter
- 2: Floating unit
- 3: Sea level
- 4: Wave
- 5: Stroke
- 7: Piston
- 8: Vertical direction
- 10: Retardation unit
- 11: Buoyancy element
- 12: Piston rod
- 13a, 13b: Damping devices
- 15: Work platform
- 17: Technical equipment
- 18: Antenna
- 20: Lateral fin
- 21a: Inlet nozzle
- 21b: Outlet nozzle
- 23: Generator circulation loops
- 24: Kaplan turbine
- 25: Generator shaft
- 26: Generator
- 28: Ground anchor
- 29: Seabed
- 30a, 30b: Elongate connection element
- 31a, 31b: Attachments
- 32: Chain buoy
- 33: Subsea floater
- 35: Subsea storage unit

## Claims

1. Wave energy converter (1), comprising
a floating unit (2) that floats on or near the fluid surface, wherein a piston (7) is movably arranged within the floating unit (2),
a generator (26) that is assigned to the floating unit (2) and that is capable of producing electric energy when driven, and
a subsea retardation unit (10) with a piston rod (12), extending from the subsea retardation unit (10) into the floating unit (2) and connected to the piston (7), wherein
waves imparting motion on the floating unit (2) cause the floating unit (2) to move relative to the piston (7), thus generating a fluid flow capable of driving the generator (26).

2. Wave energy converter (1) according to claim 1,
wherein the piston (7) is arranged within the floating unit (2) to move in a substantially vertical direction (8).

3. Wave energy converter (1) according to claim 1 or claim 2,
wherein a stroke of the piston (7) within the floating unit (2) is delimited by at least one damping device (13a, 13b).

4. Wave energy converter (1) according to one of the claims 1 to 3,
wherein the floating unit (2) comprises at least one inlet nozzle (21a) and/or at least one outlet nozzle (21b).

5. Wave energy converter (1) according to one of the claims 1 to 4,
wherein the generator (26) is driven by a turbine, preferably a Kaplan turbine (24).

6. Wave energy converter (1) according to one of the claims 1 to 5,
wherein the floating unit (2) comprises at least one lateral fin (20).

7. Wave energy converter (1) according to one of the claims 1 to 6,
wherein the wave energy converter comprises a work platform (15).

8. Wave energy converter (1) according to claim 7,
wherein work platform comprises technical equipment (17), such as antennas (18) for receiving and sending information,
inspection instrumentation,
research instrumentation,
electric energy storage and/or
instrumentation for intelligence or homeland security.

9. Wave energy converter (1) according to claim 8,
wherein the electric energy produced by the generator (26) is used for the technical equipment (17) on the work platform (15).

10. Wave energy converter (1) according to one of the claims 1 to 9,
wherein the wave energy converter (1) is anchored to a ground anchor (28), preferably by a elongate connection element (30a, 30b) attached to the subsea retardation unit (10).

11. Wave energy converter (1) according to claim 10,
wherein elongate connection element (30a, 30b) is guided to the ground anchor (28) via
a chain buoy (32) and/or
a subsea floater (33) and/or
attachments (31a, 31b) thereof.

12. Wave energy converter (1) according to claim 10 or claim 11,
wherein the elongate connection element (30a, 30b) comprises at least one cable to transport electric energy to a subsea storage unit (35).

13. Wave energy converter (1) according to claim 12,
wherein the subsea storage unit (35) is utilized to charge remotely operated vehicles such as underwater drones.

## Amended claims

### Amended claims in accordance with Rule 137(2) EPC.

1. Wave energy converter (1), comprising
a floating unit (2) that floats on or near the fluid surface, wherein a piston (7) is movably arranged within the floating unit (2),
a generator (26) that is assigned to the floating unit (2) and that is capable of producing electric energy when driven, and
a subsea retardation unit (10) with a piston rod (12), extending from the subsea retardation unit (10) into the floating unit (2) and connected to the piston (7), wherein
waves imparting motion on the floating unit (2) cause the floating unit (2) to move relative to the piston (7), thus generating a fluid flow capable of driving the generator (26).

2. Wave energy converter (1) according to claim 1,
wherein the piston (7) is arranged within the floating unit (2) to move in a substantially vertical direction (8).

3. Wave energy converter (1) according to claim 1 or claim 2,
wherein a stroke of the piston (7) within the floating unit (2) is delimited by at least one damping device (13a, 13b).

4. Wave energy converter (1) according to one of the claims 1 to 3,
wherein the floating unit (2) comprises at least one inlet nozzle (21a) and/or at least one outlet nozzle (21b).

5. Wave energy converter (1) according to one of the claims 1 to 4,
wherein the generator (26) is driven by a turbine, preferably a Kaplan turbine (24).

6. Wave energy converter (1) according to one of the claims 1 to 5,
wherein the floating unit (2) comprises at least one lateral fin (20).

7. Wave energy converter (1) according to one of the claims 1 to 6,
wherein the wave energy converter comprises a work platform (15).

8. Wave energy converter (1) according to claim 7,
wherein work platform comprises technical equipment (17), such as antennas (18) for receiving and sending information,
inspection instrumentation,
research instrumentation,
electric energy storage and/or
instrumentation for intelligence or homeland security.

9. Wave energy converter (1) according to claim 8,
wherein the electric energy produced by the generator (26) is used for the technical equipment (17) on the work platform (15).

10. Wave energy converter (1) according to one of the claims 1 to 9,
wherein the wave energy converter (1) is anchored to a ground anchor (28)by an elongate connection element (30a, 30b) attached to the subsea retardation unit (10).

11. Wave energy converter (1) according to claim 10,
wherein the elongate connection element (30a, 30b) is guided to the ground anchor (28) via
a chain buoy (32) and/or
a subsea floater (33) and/or
attachments (31a, 31b) thereof.

12. Wave energy converter (1) according to claim 10 or claim 11,
wherein the elongate connection element (30a, 30b) comprises at least one cable to transport electric energy to a subsea storage unit (35).

13. Wave energy converter (1) according to claim 12,
wherein the subsea storage unit (35) is utilized to charge remotely operated vehicles such as underwater drones.
